# EUROPEAN PATENT APPLICATION

(11) **EP 1 318 576 A1**
(43) Date of publication of application: **11.06.2003**
(21) Application number: 01129106.9
(22) Date of filing: 07.12.2001
(51) Int. Cl.: H01R 27/00, H04M 1/02, H04M 1/60

(54) **Jack-type connector for jack plugs of different number of contacts**

(71) Applicant: Sony International (Europe) GmbH, 10785 Berlin (DE)
(72) Inventor: Hansford, Jan, Sony International (Europe) GmbH, 85609 Aschheim-Dornach (DE)
(74) Representative: Körber, Martin, Dipl.-Phys.

(57) **Abstract**

A mobile communication device (300) is presented having a jack receptacle (120) for co-operation with a jack plug (110, 140) comprising a number of contact pins (121, 122, 123, 124), each contact pin providing an electrical contact facility to a respective contact area (114, 116, 141, 142) on a jack plug (110, 140) inserted into the jack receptacle (120), whereby a first set of contact pins (121) is arranged to provide an electrical contact facility to contact areas (114, 116) of a jack plug (110) of a first type, and at least one further set of contact pins (123) is arranged to provide an electrical contact facility to contact areas (141, 142) of a jack plug (140) of a further type which are not contacted by contact pins (121, 122) of the first set of contact pins. Further, a jack plug (110, 140) for co-operation with a jack receptacle (120) is presented, comprising a number of contact elements arranged in a rod-like contact geometry and a connecting means arranged on one side of the rod-like contact geometry providing terminal pins for an electrical connection, whereby two or more of the contact elements (114, 116, 141, 142) are connected through a passive (150) and/or active (151) electronic component.

## Description

The present invention relates to mobile communication devices, in particular, to mobile communication devices being used in combination with various kinds of accessories.

In the last years, mobile communication devices evolved from simple mobile phones to multifunctional devices integrating more and more features to serve as a personal assistant for a user. Beside common telephone related functions, modern mobile communication devices provide such facilities like e.g. Internet access and e-mail capabilities, electronic notebook and organiser facilities, large data storage, and playback facilities for music and many other things more. With a mobile communication device becoming a central part of everyday's life, the functions of mobile communication devices will be extended to supply a variety of different wants of various users.

Instead of using a variety of different devices, the mobile communication device now offers assistance in the daily activities of an individual. Above that, data can now easily be exchanged between different processes and services available on the mobile communication device itself.

Besides functions for business activities like an organiser, a dictaphone, a hands-free speaking set or the like, functions to be added address security issues, healthcare and leisure activities. Many of these functions require specialised add-ons like e.g. a heart pulse and rate measurement unit for joggers and cyclists, a tachometer with speed and distance control for cyclists, sensors for meteorological information, a microphone to take a dictation or for recording an interview, a small torch for nightly activities, a rape alarm or anything else the like. Usually, each accessory comes with its own special type of connector for being connected to the correct component provided in the mobile communication device. Providing an extra connector for each of the add-ons requires a lot of space on the mobile device being counterproductive to the current trend of reducing the overall size, the weight and the cost of a mobile communication device. And further, since many of the appliances use similar types of connectors, a user might easily get confused when looking for a proper receptacle for his respective accessory add-on on his mobile device. Usually, add-ons are rather used alternatively than simultaneously, so that one suitable connection capability on a mobile communication device would be sufficient.

It is therefore an object of the present invention to provide a plug-in connection for mobile communication devices which can be used in combination with different kinds of add-on accessories and which can be produced at low cost.

This object is achieved by a jack receptacle, a jack plug, a mobile communication device, and an accessory device as claimed in the respective independent claims.

This object is achieved in particular by a jack receptacle for co-operation with a jack plug comprising a number of contact pins, each contact pin providing an electrical contact facility to a respective contact area on a jack plug inserted into the jack receptacle, whereby a first set of contact pins is arranged to provide an electrical contact facility to contact areas of a jack plug of a first type, and at least one further set of contact pins is arranged to provide an electrical contact facility to contact areas of a jack plug of a further type which are not contacted by contact pins of the first set of contact pins.

Further, the above object is achieved by a jack plug for co-operation with a jack receptacle according to the present invention comprising a number of contact elements arranged in a rod-like contact geometry and a connecting means arranged on one side of the rod-like geometry providing terminal pins for an electrical connection, whereby two or more of the contact elements are connected through a passive and/or active electronic component.

The above object is further achieved by a mobile communication device adapted for being connected with different accessory devices alternatively comprising a jack receptacle according to the present invention.

Furthermore, the present invention is achieved by an accessory device for use with a mobile communication device according to the present invention, whereby a jack plug according to the present invention is provided as a connecting facility.

The jack-type connector according to the present invention not only provides the possibility to connect a great range of different accessories to a mobile communication device, e.g. a general I/O, a digital-to-analogue converter (DAC), a battery, a serial communication means or the like, but also allows a communication between an accessory and the mobile phone without a need for expensive individual connectors.

Additional advantageous features of the present invention are claimed in the respective sub-claims.

In particular is the first set of contact pins advantageously arranged adjacent to the entrance opening of the jack receptacle and a further set of contact pins is arranged subsequent to the side of the first set of contact pins opposite to the entrance opening of the jack receptacle.

Alternatively, a further set of contact pins may advantageously interleave with the first set of contact pins and/or another further set of contact pins.

A catch pin is further advantageously provided for each type of jack plug to be used with the jack receptacle whereby the catch pin is adapted to fit in a corresponding notch of the respective jack plug.

A catch pin may further be made from electrically insulating material. Alternatively, a catch pin can be made from electrically conducting material thus being adapted to serve as a contact pin of a first or of a further set of contact pins.

In a preferred embodiment of the present invention the type and/or characteristic of the passive and/or active electronic component connecting two or more contact elements of a jack plug forms a key for identifying the type of the jack plug. A key for identifying the type of a jack plug may further be implemented by identifying which contact elements are connected through a passive and/or active electronic component.

Preferably, a contact pin of the jack receptacle provides access to a battery of the mobile communication device. Further, a contact pin of the jack receptacle advantageously provides access to an input/output means of the mobile communication device, the input/output means controlling a data transfer to accessory devices. A contact pin of the jack receptacle may further advantageously provide access to a converting means of the communication device for converting analogue signals into digital signals and/or digital signals into analogue signals. The converting means is advantageously adapted to monitor a signal conversion. Further advantageously, a contact pin of the jack receptacle provides access to a serial communication means of the mobile communication device which controls a serial communication between the mobile communication device and an accessory device.

The jack receptacle, the jack plug, the mobile communication device, and the accessory. device according to the present invention can e.g. be used to make an acoustical device or any actuatory or sensory interface available for mobile devices, but in reverse also to make resources of the mobile communication device available for the most different appliances.

In the following specification, the present invention is explained in more detail with respect to special embodiments and in relation to the enclosed drawings, in which
Fig. 1a shows a jack receptacle according to the present invention with a short jack plug inserted,
Fig. 1b shows a jack receptacle according to the present invention with a long jack plug inserted,
Fig. 2a shows a jack plug with a resistor interconnecting two contact elements,
Fig. 2b shows a jack plug with a transistor interconnecting three contact elements, and
Fig. 3 schematically shows a mobile communication device according to the present invention with a variety of add-on accessories.

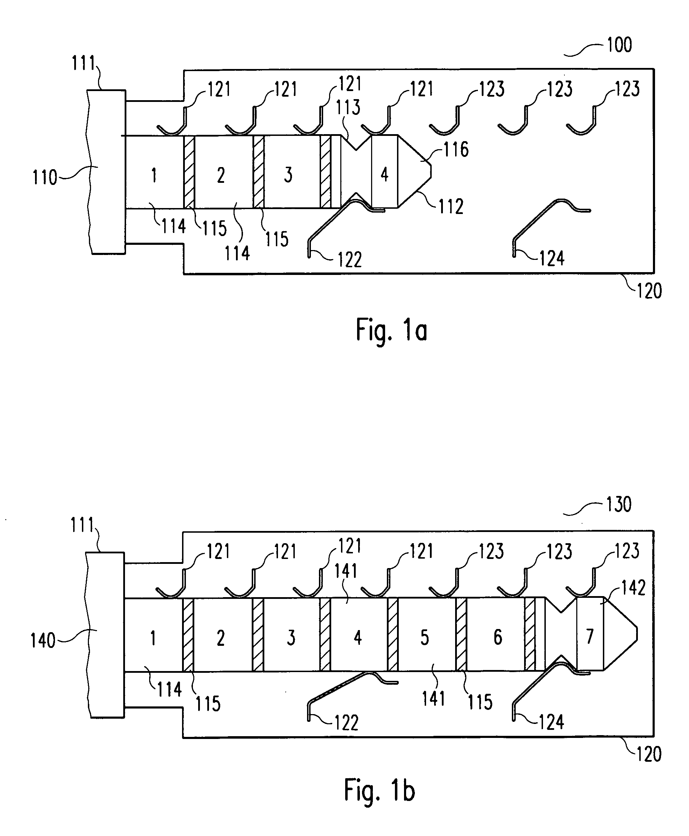

An example for a jack receptacle according to the present invention is shown in Fig. 1a and Fig. 1b. The jack type connector 100 of Fig. 1a shows a jack plug 110 of a first type and a jack receptacle 120 adapted to receive at least two different kinds of jack plugs. The main components of the jack plug 110 are the connector sleeve 111 and the connector rod 112. The connector sleeve 111 houses the connecting means like e.g. solder terminals or the like for connecting the jack plug to a cable or a printed circuit board (PCB) or the like. The connector rod 112 is sub-divided into several contact elements 114 which are separated from each other by insulating material 115. The last contact element 116 situated on the clear far end of the connector rod has a pointed form to ease an insertion of the jack plug 110 in the receptacle 120. The jack plug 110 is equipped with a notch 113 near the tip of the connector rod 112 to allow a snap-in engagement in a jack receptacle.

The jack receptacle 120 comprises a number of contact pins 121 and 123, whereby the contact pins 121 are intended to make an electrical contact to the respective contact areas of the contact elements 114 and, if necessary to the contact element 116 of the short jack plug 110. The other contact pins 123 stand clear of a short plug 110 inserted into the jack receptacle 120. In the context of this specification, the term "contact pin" is used different from its common meaning which refers to the pin-like structure of a contact. In the present description however, "contact pin" means any contact option allowing the contact rod 112 to glide along it and with the contact pin itself applying a sufficient force to the contact rod 112 for producing a large enough contact area with one of the contact elements 114 to provide an electrical contact of low resistance. A spring contact is just one of the many possible types for forming a contact pin.

A jack plug is fixed to a jack receptacle by a snap-in means 122. Usually, the snap-in means 122 is carried out in form of a spring with a locating lug fitting in a respective notch 113 of a jack plug 110 being completely inserted into the jack receptacle 120. Any type of snap-in means like e.g. a spring contact, or a spring suspended ball or the like can be used. The snap-in means 122 can serve a mechanical and an electrical connecting purpose at the same time. For this case, the snap-in means 122 is carried out as a catch pin fitting in a respective notch 113 of the jack plug 110 and providing an electrical contact from the surface of the notch 113 and/or the nearby area to the outside of the jack receptacle 120. The notch 113 does not have to be necessarily implemented near the pointed contact 116 of the jack plug 110 as shown in Fig. 1, but can also be a part of one of the other contact elements 114. In this special case, jack plugs can be used with the notch 113 being situated at the same distance from the jack connector sleeve 111 independent of the total length of a jack plug. That way only one snap-in means 122 is required in a jack receptacle according to the present invention.

But, if the notch 113 is always integrated in the contact element at the clear far end of the contact rod 112, then at least two snap-in means 122 and 124 have to be provided to allow different types of jack plugs being used with the jack receptacle 120.

Fig. 1b shows a plug-in connection 130 with a long jack plug 140 inserted into the jack receptacle 120 according to the present invention. The first set of contact pins 121 connects the contact elements of the jack plug close to the connector sleeve 111. Adjacent to the first set of contact pins, a second set of contact pins 123 contacts the contact elements 141 by which the long jack plug 140 is extended when compared to the short jack plug 110 of Fig. 1a.

Attention is now drawn to the special contact pin 121 being responsible for making an electrical contact to contact element 116 of the short jack plug 110 as well as the fourth contact element of the long jack plug in Fig. 1b when counted from the connector sleeve 111. Using an electrical conductive material for the catch pin 122 already provides a means for contacting contact elements 116 of jack plugs 110 and a fourth contact element of a jack plug 140. The contact pin 121 for providing an electrical contact to those contact elements can therefore be omitted. The same is true for the special contact pin 123 responsible for electrically contacting to a contact element 142 of the jack plug 140 on the occasion that the catch pin 124 is made from electrically conductive material.

Supposed a catch notch 113 of a jack plug 110 or 140 is not designed to match with a respective contact element of a jack plug, then the corresponding catch pin is preferably made from electrically insulating material to avoid malcontacting or a short-circuiting between two neighbouring contact elements. In this case, the jack receptacle 120 has to provide respective contact pins 121 and 123 to allow the electrical contacting of the respective contact areas of the jack plugs as shown in Fig. 1a and Fig. 1b.

It has to be noted that the illustrations of Fig. 1a and Fig. 1b are only simplified and selected examples for illustrating the fundamentals of the present invention. For instance are only two sets of contact pins 121 and 123 shown in said figures, but from the previous explanations it becomes clear that further sets of contact pins can also be used. Further it is to be noted, that the number of further sets of contact pins 123 is not limited to only one and that theses further sets of contact pins do not necessarily have to be arranged adjacent to each other, but can also show an interleaved arrangement.

The minimum number of contact elements required on a jack plug for a certain accessory is given by the number of connections necessary for using the accessory device combined with the mobile communication device 300. When the contact pins 121 and 123 of the jack receptacle 120 are hardwired to the respective modules or chip sets, respectively, of the mobile communication device, then those contact elements 121 and 123 providing a contact to a module not needed by the accessory remain unused. In other words, the corresponding contact elements 11 are not connected to any means of the accessory device. When contact pins 121 and 123 can be switched to respective modules in the communication device 300 depending on the type of the accessory, then jack plugs with the same number of contact elements can have different wiring assignments.

The type of the accessory can for one be identified from the mobile communication device 300 by a respective data request over respective contact elements of a jack plug reserved for a data communication with the attached accessory device. This would require to equip each add-on accessory with a minimum amount of "intelligence" so that even simple add-ons like a torch mainly consisting of light emitting diodes (LED) in a housing would have to be equipped with data communication means.

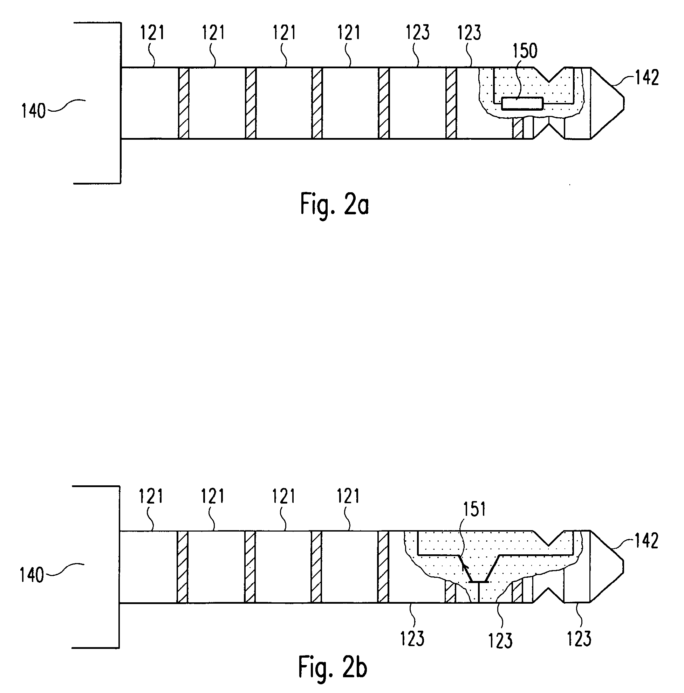

An identification of the accessory can therefore alternatively or additionally be achieved by connecting a passive 150 or active 151 electronic component between two or more of the contact elements of a jack plug. The accessory device is then identified by determining the type of the component e.g. being a resistor, a capacitor, an inductance and/or by determining its characteristic like the resistance, the capacitance or the induction. Using active electronic components like diodes, transistors, thyristors or the like allow further ways of identification by for instance using them as switching components to activate a respective module on the mobile communication device 300. The characteristic of an active electronic component may already form a key for identifying the special accessory device connected to the jack plug. The mentioned electronic components can either be integrated into the jack plug itself as shown in Fig. 2a and Fig. 2b or be a part of the accessory device itself and made accessible for the mobile communication device 300 through the respective contact elements of a jack plug 110 or 140. The passive and/or active electronic components work in either case as a key for the identification of the respective type of jack plug or accessory device. In other words, the jack plug can hold an identification, like e.g. a resistor or another device mentioned above which can be manipulated by the phone.

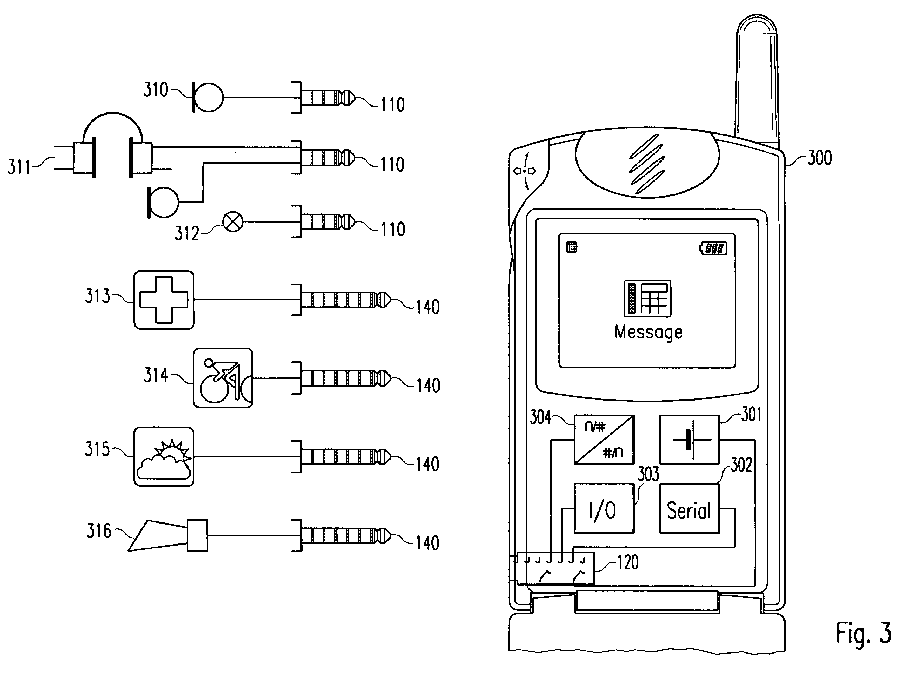

The schematic representation of Fig. 3 shows a mobile communication device 300 with a jack receptacle 120 according to the present invention. The mobile communication device 300 contains a battery 301, a module for serial data communication 302, another module 303 operating as a general input/output facility, and a module 304 providing analogue/digital and digital/analogue signal conversion both with and without monitoring. All modules 301 through 304 are connected to respective contact pins 121 or 123 of the jack receptacle 120.

As an example for many more accessory devices which can be used in combination with the mobile communication device 300, seven accessories are indicated in Fig. 3. Most commonly a headset 311 with a jack type connection is used on a mobile communication device 300 utilising the audio-capabilities provided by the mobile device. Depending on the type of the headset only three or four contact elements are necessary. A headset therefore usually comes with a short type jack plug 110. A microphone 310 can be regarded as a sub-set of a headset and comes therefore preferably with the same type of jack plug 110 as the headset, whereby not all contact elements are used, in particular the ones reserved for the earplugs.

A simple torch 312 using a bulb with low power consumption or LED's, usually requires only a power supply, in other words a direct access to the battery 301 of a mobile device 300. If the wiring assignment of the contact pins 121 cannot be changed within the mobile device 300, the torch has to be cabled to a jack plug 140 providing a second set of contact elements 141 and 142 allowing an access to the power supply of the mobile device. If the wiring of the contact pins 121 to modules of the mobile device 300 can be changed upon identifying the type of a jack plug or the type of an accessory device, respectively, then the torch can be equipped with the shortest jack plug 110 usable with the mobile device 300.

Other equipment, like a heart pulse and rate measurement 313, a speedometer or distance indicator 314, a device for measuring meteorological data 315, or a device to provide a rape or raid alarm 316 or the like, require an access to a variety of different modules provided within the mobile device 300. Therefore, they come with a jack plug 140 providing more contact elements than the shortest usable jack plug 110. The additional contact pins 123 for contacting those additional contact elements 141 and 142 are e.g. connected to a battery 301 of the mobile device 300, a serial communication means 302, a general input/output (I/O) means 303 and a converting means 304 for converting analogue in digital signals and vice a versa.

Presently, not all of the chip sets available on a mobile communication device are used, so that the modules 301 to 304 can be implemented using functionality of those spare chip sets.

Since the jack receptacle 120 according to the present invention is adapted to receive many kinds of jack plugs including the usual jack plug currently used for headsets on mobile communication devices, nowadays headsets can be still be used with a mobile communication device 300 according to the present invention. The only increase in production cost is thus formed by the additional number of contact pins of the specialised female connector required to provide the additional connections for the various kinds of other add-on accessory devices, and the additional space required on the PCB. But as a normal hands-free kit can be entered, there is practically no extra cost for the basic phone. Because the identification of an accessory device is implemented using functionality of spare chip sets on the mobile device 300, the functionality of a mobile communication device according to the present invention can be adapted to a new add-on by simply modifying the software controlling the functionality of the spare chip sets. The necessary resources like e.g. I/O, DACs, battery, and serial communication means are always present or left over from ASIC (Application Specific Integrated Circuit) devices on the mobile communication device. This means, that extending the number of functionalities by a new accessory requires no extra hardware on the mobile device so that the cost for extending the functionality of the mobile device is kept at a very low level nearly reducing to the price of the new accessory itself.

Further, by disclosing a basic specification of the jack-type connector, a manufacturer of mobile communication devices can allow manufacturers of accessory devices to develop any kind of accessories on their own for a potentially unlimited function extension of his mobile devices.

## Claims

1. Jack receptacle for co-operation with a jack plug (110, 140) comprising a number of contact pins (121, 123), each contact pin providing an electrical contact facility to a respective contact area (114, 116, 141, 142) on a jack plug (110,140) inserted into the jack receptacle (120),
**characterised in**
**that** a first set of contact pins (121) is arranged to provide an electrical contact facility to contact areas (114, 116) of a jack plug of a first type (110), and
at least one further set of contact pins (123) is arranged to provide an electrical contact facility to contact areas (141, 142) of a jack plug of a further type (140) which are not contacted by contact pins (121) of the first set of contact pins.

2. Jack receptacle according to claim 1,
**characterised in**
**that** the first set of contact pins (121) is arranged adjacent to the entrance opening of the jack receptacle (120) and a further set of contact pins (123) is arranged subsequent to the side of the first set of contact pins (121) opposite the entrance opening of the jack receptacle (120).

3. Jack receptacle according to claim 1,
**characterised in**
**that** a further set of contact pins (123) interleaves with the first set of contact pins (121) and/or another further set of contact pins (123).

4. Jack receptacle according to claim 1, 2 or 3,
**characterised in**
**that** a catch pin (122, 124) is provided for each type of jack plug to be used with the jack receptacle with the catch pin (122, 124) being adapted to fit in a corresponding notch (113) of the respective jack plug.

5. Jack receptacle according to claim 4,
**characterised in**
**that** a catch pin (122, 124) is made from electrically insulating material.

6. Jack receptacle according to claim 4,
**characterised in**
**that** a catch pin (122, 124) is made from electrically conducting material and is adapted to serve as a contact pin of a first or of a further set of contact pins.

7. Jack plug for co-operation with a jack receptacle (120) according to one of the claims 1 to 6 comprising a number of contact elements (114, 116, 141, 142) arranged in a rod like contact geometry and a connecting means arranged on one side of the rod like contact geometry providing terminal pins for an electrical connection,
**characterised in**
**that** two or more of the contact elements (114, 116, 141, 142) are connected through a passive (150) and/or active (152) electronic component.

8. Jack plug according to claim 7,
**characterised in**
**that** the type and/or characteristic of the passive (150) and/or active (151) electronic component forms a key for identifying the type of a jack plug.

9. Jack plug according to claim 7 or 8,
**characterised in**
**that** a key for identifying the type of a jack plug is formed by identifying which contact elements (114, 116, 141, 142) are connected through a passive (150) and/or active (151) electronic component.

10. Mobile communication device adapted for being connected to different accessory devices (310, 311, 312, 313, 314, 315, 316) alternatively comprising a jack receptacle (120) according to one of the claims 1 to 6.

11. Mobile communication device according to claim 10,
**characterised in**
**that** a contact pin (121, 123) of the jack receptacle provides access to a battery (301) of the mobile communication device (300).

12. Mobile communication device according to claim 10 or 11,
**characterised in**
**that** a contact pin (121, 122, 123, 124) of the jack receptacle (120) provides access to an input/output means (303) of the mobile communication device (300) that input/output means (303) controlling a data transfer to an accessory device (310, 311, 312, 313, 314, 315, 316).

13. Mobile communication device according to claim 10, 11 or 12,
**characterised in**
**that** a contact pin (114, 116, 141, 142) of the jack receptacle (120) provides access to a converting means (304) of the mobile communication device (300) for converting analogue signals into digital signals and/or digital signals into analogue signals.

14. Mobile communication device according to claim 13,
**characterised in**
**that** the converting means (304) is adapted to monitor a signal conversion.

15. Mobile communication device according to one of the claims 10 to 14,
**characterised in**
**that** a contact pin (114, 116, 141, 142) of the jack receptacle (120) provides access to a serial communication means (302) of the mobile communication device (300) which controls a serial communication between the mobile communication device (300) and an accessory device (310, 311, 312, 313, 314, 315, 316).

16. Accessory device for use with a mobile communication device according to one of the claims 10 to 15,
**characterised in**
**that** a jack plug (110, 140) according to one of the claims 7 to 9 is provided as a connecting facility.

17. A combination of a mobile communication device according to one of the claims 10 to 15 with an accessory device according to claim 16.
